(19) **Europäisches Patentamt / European Patent Office / Office européen des brevets**

(11) **EP 3 466 598 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(51) Int Cl.:
**B23K 26/06** (2014.01) **B23K 26/067** (2006.01)
**B23K 26/352** (2014.01)

(21) Anmeldenummer: **18193961.2**

(22) Anmeldetag: **12.09.2018**

(54) **LASEROPTISCHE ANORDNUNG ZUR LASERINTERFERENZBEARBEITUNG, INSBESONDERE LASERSTRUKTURIERUNG VON OBERFLÄCHEN**

LASER OPTICAL ARRANGEMENT FOR LASER INTERFERENCE PROCESSING, IN PARTICULAR LASER STRUCTURING OF SURFACES

DISPOSITIF OPTIQUE LASER DESTINÉ AU TRAITEMENT PAR INTERFÉRENCES LASER, EN PARTICULIER À LA STRUCTURATION DE SURFACES PAR LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2017 DE 102017216406**

(43) Veröffentlichungstag der Anmeldung:
**10.04.2019 Patentblatt 2019/15**

(73) Patentinhaber:
• **FRAUNHOFER-GESELLSCHAFT zur Förderung der angewandten Forschung e.V.**
  **80686 München (DE)**
• **Technische Universität Dresden**
  **01069 Dresden (DE)**

(72) Erfinder:
• **Alamri, Sabri**
  **01067 Dresen (DE)**
• **El-Khoury, Mikhael**
  **01277 Dresden (DE)**
• **Kunze, Tim**
  **01157 Dresden (DE)**
• **Lasagni, Andrés Fabiàn**
  **01723 Grumbach (DE)**

(74) Vertreter: **Pfenning, Meinig & Partner mbB Patent- und Rechtsanwälte An der Frauenkirche 20 01067 Dresden (DE)**

(56) Entgegenhaltungen:
**EP-A2- 0 930 485    US-A1- 2011 226 748**

**Beschreibung**

Die Erfindung betrifft eine laseroptische Anordnung zur Laserstrukturierung von Oberflächen oder einer interferenzbasierten Laserbearbeitung, die zu einer lokal definierten Modifizierung an einer Oberfläche führt. Eine derartige Anordnung ist der US2011/226748 zu entnehmen. Diese Art der Anordnung ist besonders geeignet, um Oberflächen mittels Hochgeschwindigkeitsstrahlablenksystemen, wie z.B. Galvanometer- und Polygonscanner sowie Beam-Steering Systemen bestehend, z.B. aus einer Anordnung aus Risleyprismen zu strukturieren bzw. zu bearbeiten. Des Weiteren lassen sich mit der Erfindung Interferenzmuster auf Oberflächen abbilden bzw. übertragen, die ansonsten nur schwer zugänglich sind, wie dies bei Vertiefungen oder im Inneren von Rohren der Fall ist.

In der jüngsten Vergangenheit hat sich das direkte Laserinterferenzstrukturieren (DLIP) als ein für großflächige Oberflächenstrukturierungen bzw. - bearbeitungen geeignetes Verfahren heraus gestellt, mit dem Interferenzmuster in relativ kurzer Zeit auf Oberflächen übertragen werden können.

Mit den bekannten Anordnungen und Vorgehensweisen werden Teilstrahlen eines Laserstrahls auf eine zu bearbeitende Oberfläche gerichtet, so dass sie im Bereich der jeweiligen Oberfläche miteinander interferieren. Dies bedeutet, dass Interferenz unmittelbar auf der jeweiligen Oberfläche, geringfügig über oder hinter der Oberfläche infolge des sich ausprägenden, lokal begrenzten, Interferenzvolumens erreicht werden soll. Dies hat aber zur Folge, dass man bzgl. weiterer die Richtung der Teilstrahlen, die miteinander interferieren sollen, nicht beliebig verändern kann, ohne den Interferenzeffekt zu verlieren oder zumindest zu reduzieren. Dies wirkt sich nachteilig aus, wenn man in noch kürzerer Zeit sogar noch größere Oberflächenstrukturierungen ausbilden möchte. Die lokale Begrenzung des Interferenzvolumens ist eine direkte Folge der mit einem verhältnismäßig großen Abstand zueinander parallel geführten und unter einem definierten Winkel zur Interferenz gebrachten Teilstrahlen, welche nach einer kurzen Interaktionszeit wieder auseinanderlaufen. Dieser bekannte Ansatz zur Erzeugung von Interferenz ist aufgrund des verhältnismäßig großen Teilstrahlabstandes ungeeignet, um Strahlablenksysteme mit geringer Apertur für das Interferenzverfahren zu nutzen.

So ist aus EP 0 930 485 A2 eine Vorrichtung zur Erfassung oder Erzeugung optischer Signale bekannt.

US 2011/0226748 A1 betrifft ein Verfahren nach dem Oberbegriff des Anspruchs 1 und eine Vorrichtung bei denen durch photoelektrische Wandlung eine Tiefenbestimmung von Vertiefungen erreichbar ist.

Es ist daher Aufgabe der Erfindung, Möglichkeiten für eine Strukturierung bzw. Bearbeitung von Oberflächen mit miteinander interferierenden Laserstrahlen anzugeben, mit denen man die generelle Nutzbarmachung des DLIP-Prinzips für die genannten Hochgeschwindigkeitsstrahlablenksysteme ermöglichen, die Produktivität erhöhen und möglichst auch eine Interferenzbearbeitung in ansonsten schwer zugänglichen Oberflächenregionen von Substraten ausbilden kann.

Erfindungsgemäß wird diese Aufgabe mit einer laseroptischen Anordnung, die die Merkmale des Anspruchs 1 aufweist, gelöst. Vorteilhafte Ausgestaltungen und Weiterbildungen der Erfindung können mit in untergeordneten Ansprüchen angeführten Merkmalen realisiert werden.

Die erfindungsgemäße Anordnung weist eine Laserstrahlquelle auf von der ein Laserstrahl emittiert wird. Der Laserstrahl wird mit mindestens einem Strahlteiler in mindestens zwei Teilstrahlen geteilt. Die erhaltenen Teilstrahlen treffen auf reflektierende Elemente und mindestens einen weiteren Strahlteiler so auf, dass mindestens zwei miteinander interferierende Teilstrahlen auf eine zu bearbeitende Oberfläche eines Substrates auftreffen. Üblicherweise sind dabei die Oberflächen der Strahlteiler und/oder reflektierende Elemente in einem Winkel von 45 ° in Bezug zur optischen Achse des Laserstrahls und/oder der Teilstrahlen ausgerichtet. Die zwei Teilstrahlen können aber auch allein oder zusätzlich auf einen zweiten Strahlpfad auftreffen.

Bei der Erfindung ist aber mindestens einer der Strahlteiler oder mindestens eines der reflektierenden Elemente um eine senkrecht zur optischen Achse eines Teilstrahles in einem Winkel θ um den üblicherweise festgelegten 45 ° Winkel verschwenkbar oder verschwenkt, so dass eine Phasenverschiebung zwischen den Teilstrahlen erreichbar ist und die Teilstrahlen ab dem im Strahlengang der Teilstrahlen ausgehend vom ersten Strahlteiler zuletzt angeordneten Strahlteiler miteinander interferieren.

Die Phasenverschiebung Δφ richtet sich dabei nach der Gleichung

$$\Delta\varphi = 2\pi/\lambda * n * d * \sin\theta.$$

Dabei sind n der optische Brechungsindex von Luft und d die Wegdifferenz zwischen den sich treffenden Teilstrahlen.

Der mindestens eine Strahlteiler oder das mindestens eine reflektierende Element sollte um eine senkrecht zur optischen Achse eines Teilstrahles in einem Winkel θ von 0 ° bis maximal 10°, bevorzugt maximal 5°, besonders bevorzugt maximal 2° verschwenkbar, wobei θmax von den optischen Eigenschaften des Lasers definiert wird (z.B. vom Laserstrahlabmessung). Vorteilhaft sollte der von den Teilstrahlen bis zum Auftreffen auf den im Strahlengang der Teilstrahlen ausgehend vom ersten Strahlteiler zuletzt angeordneten Strahlteiler zurück gelegte Weg jeweils gleich lang sein.

Im Strahlengang von miteinander interferierenden Teilstrahlen kann zwischen dem im Strahlengang der Teilstrahlen ausgehend vom ersten Strahlteiler zuletzt angeordneten weiteren Strahlteiler und der zu bearbeitenden Oberfläche eines Substrates ein senkrecht zur optischen Achse interferierende Teilstrahlen um mindestens eine Achse verschwenkbares, die miteinander interferierenden Teilstrahlen reflektierendes Element (Galvo-Scanner) oder ein um eine Achse drehbarer facettierter Polygonspiegel so angeordnet sein, dass miteinander interferierende Teilstrahlen auf eine zu bearbeitenden Oberfläche eines Substrates auftreffen und dabei zusätzlich ausgelenkt werden können. Mit einem oder mehreren solchen reflektierenden Element(en) kann/können also die Richtung, mit der die miteinander interferierenden Teilstrahlen auf die jeweilige Oberfläche eines dort zu bearbeitenden Substrates auftreffen, verändert werden. Dies führt zu der Möglichkeit die Richtung des Interferenzmusters kontinuierlich um 90° zu drehen. Eine Drehung kann auch für jeden einzelnen Laserimpuls durchgeführt werden.

Im Strahlengang von miteinander interferierenden Teilstrahlen kann vor dem Auftreffen auf eine zu bearbeitende Oberfläche eines Substrates mindestens ein fokussierendes optisches Element angeordnet sein.

Im Strahlengang mindestens eines Teilstrahles kann auch ein Phasenschieber angeordnet sein.

Bei der Erfindung kann eine zumindest nahezu beliebige Laserstrahlquelle eingesetzt werden, was insbesondere die Wellenlänge, die Pulsdauer und die Energiedichte betrifft. Der jeweilige von der Laserstrahlquelle emittierte Laserstrahl kann mit geeigneten optischen Elementen beeinflusst, insbesondere kollimiert oder anderweitig geformt werden, bevor die Strahlteilung erfolgt. Es ist auch eine bestimmte Polarisation möglich, indem in den Strahlengang des emittierten Laserstrahls ein Polarisator angeordnet wird, beispielsweise bevor die Strahlteilung erfolgt.

Mit einem im Strahlengang des emittierten Laserstrahls angeordneten Strahlteiler wird der Laserstrahl in mindestens zwei Teilstrahlen geteilt. Es sollte dabei eine jeweils gleiche Intensität der Teilstrahlen, die miteinander interferieren sollen, erreicht werden.

Bei einer vorteilhaften Ausführungsform der Erfindung trifft ein Teilstrahl dann auf ein reflektierendes Element. Es handelt sich bei diesem Teilstrahl um den durch den Strahlteiler transmittierten Teilstrahl. Er trifft auf ein reflektierendes Element auf. Durch die Reflexion verändert sich die Strahlrichtung um 90 °. Dazu ist dieses reflektierende Element üblicherweise mit seiner reflektierenden Oberfläche in einem Winkel von 45 ° in Bezug zur optischen Achse des auftreffenden Teilstrahles ausgerichtet, wenn dieses reflektierende Element nicht um die senkrecht zur optischen Achse des auftreffenden Teilstrahles verschwenkbar oder im Winkel von 45° ausgerichtet ist.

Der an einer Oberfläche des im Strahlengang des Laserstrahls bis zur Strahlteilung zuerst angeordneten Strahlteiler reflektierte Teilstrahl ist dabei auf eine Oberfläche eines weiteren reflektierenden Elements gerichtet. Die reflektierende Oberfläche dieses Strahlteilers ist in Bezug zur optischen Achse des Laserstrahls um 45° geneigt, wenn dieser erste Strahlteiler nicht um die entsprechende Achse verschwenkbar oder in einem Winkel θ ausgerichtet ist.

Die von den reflektierenden Elementen reflektierten Teilstrahlen treffen auf zwei sich gegenüberliegend angeordnete Oberflächen eines weiteren Strahlteilers. Ein vom weiteren reflektierenden Element reflektierter Teilstrahl trifft auf eine Oberfläche des weiteren Strahlteilers und transmittiert durch den weiteren Strahlteiler. Der jeweils andere Teilstrahl wird von der gegenüberliegend angeordneten Oberfläche des weiteren Strahlteilers reflektiert. Beide Teilstrahlen sollen so auf den weiteren Strahlteiler auftreffen, dass sie dort miteinander interferieren und so als miteinander interferierende Teilstrahlen in Richtung einer zu bearbeitenden Oberfläche eines Substrates gerichtet sind.

Es werden aber bei dieser Ausführungsform am weiteren Strahlteiler jeweils zwei Paare von zwei miteinander interferierenden Teilstrahlen erhalten. Beide Paare können für eine Strukturierung von Oberflächen mindestens eines Substrates genutzt werden. Dazu können die jeweiligen Paare interferierender Teilstrahlen entsprechend umgelenkt und in ihrer Richtung verändert werden.

Es besteht aber auch die Möglichkeit, ein Paar von miteinander interferierenden Teilstrahlen auf einen Detektor zu richten, mit dessen Messsignalen eine Regelung möglich ist. Dies kann beispielsweise die Ausrichtung der miteinander interferierenden Teilstrahlen, der Phasenunterschied und/oder die jeweilige Polarisation betreffen.

Der weitere Strahlteiler kann, wie bereits bei den anderen optischen Elementen, nämlich dem ersten Strahlteiler oder den reflektierenden Elementen so ausgebildet und ausgerichtet sein, dass seine Oberflächen auf die einzelne Teilstrahlen auftreffen, in einem Winkel θ von 45 ° in Bezug zu den optischen Achsen der auftreffenden Teilstrahlen ausgerichtet sein, wenn dieser Strahlteiler nicht verschwenkbar oder verschwenkt ist.

Wie bereits zum Ausdruck gebracht, muss erfindungsgemäß mindestens ein Strahlteiler und/oder ein Teilstrahlen reflektierendes Element verschwenkbar oder verschwenkt sein.

Selbstverständlich können auch mehr als jeweils zwei Teilstrahlen reflektierende Elemente bzw. Strahlteiler eingesetzt werden. Dabei sollte jedoch beachtet werden, dass in jedem Fall der Weg den Teilstrahlen bis zum im Strahlengang der Teilstrahlen zuletzt, also vor dem zu strukturierenden Substrat angeordneten Strahlteiler ein gleich langer Weg der Teilstrahlen zurück gelegt wird und an diesem Strahlteiler Interferenz von Teilstrahlen auftritt.

Der Phasenunterschied, der bei den miteinander interferierenden Teilstrahlen auftritt, wird auch mit dem jeweiligen von 45 ° abweichenden Schwenkwinkel θ der Oberfläche(n) des mindestens einen Strahlteilers oder reflektierenden Elements bestimmt. Er kann während des Betriebs konstant gehalten oder auch verändert werden. Mit dem jeweiligen von 45 ° abweichenden Winkel θ der Oberflächen mindestens eines Strahlteilers und/oder reflektierenden Elements kann auch die Interferenz der aus einem weiteren Strahlteiler austretenden miteinander interferierenden Teilstrahlen erreicht bzw. beeinflusst werden.

Der gesamte Phasenunterschied zwischen den interferierenden Teilstrahlen kann auch durch die Fokussierung, mit der die miteinander interferierenden Teilstrahlen auf die jeweilige Oberfläche gerichtet werden, beeinflusst werden.

Die räumliche Periode Λ eines linienförmigen Strukturmusters, das auf der Oberfläche eines Substrates mit den interferierenden Teilstrahlen ausgebildet werden kann, kann entsprechend der Gleichung

$$\Lambda = (k_L * \lambda)/\sin \theta$$

bestimmt werden. Dabei handelt es sich bei dem Faktor $k_L$ um einen Koeffizienten, der die Phasenbeeinflussung der jeweiligen Fokussieroptik berücksichtigt.

Mit einer kombinierten Verschwenkung in einem von 45 ° abweichenden Winkels θ von zwei der genannten optischen Elemente (Strahlteiler und/oder reflektierende Elemente) kann die auszubildende Struktur auf der Oberfläche eines Substrates von der vertikalen in die horizontale Richtung auch durch kontinuierliche Drehung kontinuierlich verändert werden.

Durch den Einsatz eines um mindestens eine Achse verschwenkbaren reflektierenden Elements auf das miteinander interferierende Teilstrahlen auftreffen und durch dessen Verschwenkung kann eine zusätzliche Auslenkung erreicht werden oder ein um eine Rotationsachse drehbaren facettierten Polygonspiegels, auf dessen sich am äußeren Umfang angeordneten einzelnen reflektierenden Flächen (Facetten) die miteinander interferierenden Teilstrahlen sukzessive bei der Drehung des Polygonspiegels auftreffen kann die jeweilige Größe eines Oberflächenbereichs, der ohne zusätzliche Relativbewegung erreicht werden kann, vergrößert werden.

Ein verschwenkbares reflektierendes Element oder die reflektierenden Flächen eines Polygonspiegels kann/können in einem Abstand vom weiteren Strahlteiler, aus dem die miteinander interferierenden Teilstrahlen austreten, angeordnet sein, der nicht größer als die Größe der jeweiligen reflektierenden Fläche ist.

Anstelle mindestens eines verschwenkbaren Elements oder Polygonspiegels kann auch ein anderes optisches Element mit dem die Richtung der miteinander interferierenden Teilstrahlen verändert werden kann, eingesetzt werden. In allen Fällen können Richtungsänderungen der miteinander interferierenden Teilstrahlen erreicht werden, die größer als der Winkel θ sind.

Mit einer typischen Größe solcher reflektierender Flächen im Bereich 6 mm bis 8 mm kann durch die Verschwenkung oder Drehung die Geschwindigkeit bei der Ausbildung von Oberflächenstrukturen mit den miteinander interferierenden Teilstrahlen in den Bereich von mindestens 1m²/min und darüber hinaus erhöht werden.

Vorteilhaft bei der Erfindung ist auch der mögliche große Abstand zwischen einem weiteren Strahlteiler, aus dem die miteinander interferierenden Teilstrahlen austreten, und der zu bearbeitenden Oberfläche eines Substrates durch die erreichbare Quasi-Kolinearität dieser Teilstrahlen.

Es ist eine Beeinflussung der Interferenzperiode durch die jeweilige Abweichung des Winkels θ von 45 ° möglich. Dies kann unter Berücksichtigung der Gleichung

$$\Lambda = (k_L * \lambda)/\sin \theta$$

erreicht werden.

Es können so unterschiedliche Interferenzperioden einfach eingesetzt und ausgenutzt werden.

Es können auch ringförmige Strukturmuster, durch den Einsatz eines Linsensystems, ausgebildet werden, um die Wellenfront von plan zu sphärisch zu ändern. Ein solches Linsensystem kann hinter dem Ausgang der Laserstrahlungsquelle im Strahlengang des ausgetretenen Laserstrahls angeordnet sein.

Es besteht auch die Möglichkeit, Pico- oder Femtosekunden-Laserstrahlungsquellen einzusetzen, da insbesondere die miteinander interferierenden Teilstrahlen zwei gleich lange optische Wege zurücklegen sollten.

Es können Oberflächen an Substraten mit der Erfindung strukturiert bzw. bearbeitet werden, die teilweise oder vollständig verschlossen sind, wie dies beispielsweise aus bestimmten Richtungen bei Rohren der Fall ist.

Neben einer Oberflächenstrukturierung kann eine interferenzbasierte Laserbearbeitung durchgeführt werden, die zu einer lokal definierten Modifizierung an einer Oberfläche führt. Dies kann beispielsweise eine lokal definierte Veränderung des Werkstoffs, ein lokal definiertes Trennen von Werkstoffen oder auch ein lokal definiertes Fügen von Werkstoffen sein.

Nachfolgend soll die Erfindung beispielhaft näher erläutert werden.

Dabei können einzelne Merkmale der unterschiedlichen Beispiele oder Merkmale, die in unterschiedlichen Figuren gezeigt sind, unabhängig vom jeweiligen Beispiel oder der jeweiligen Figur miteinander kombiniert eingesetzt werden.

Es zeigen:

Figur 1 in schematischer Form ein Beispiel einer erfindungsgemäßen optischen Anordnung;

Figur 2a-c in schematischer Form Beispiele eines verschwenkbaren weiteren Strahlteilers allein (a), in Kombination mit einem Fokussierungssystem (b) oder ein Laser-Scanner (c);

Figur 3a-c ein Simulationsbeispiel zur Strukturierung mit einer Anordnung nach Figur 1 und

Figur 4 Ergebnisse der Simulation, mit einem Diagramm der erreichbaren Strukturperiode Λ in Abhängigkeit des Winkels θ des reflektierenden Elements M2.

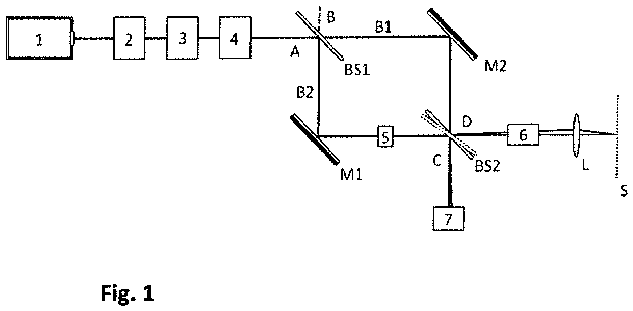

Bei dem in Figur 1 gezeigten Beispiel wird ein Laserstrahl A von einer Laserstrahlquelle 1 emittiert und gelangt zu einem optischen System 2 zur Fokussierung, ein optisches Element 3 zur Strahlformung, einen Polarisator 4 auf einen ersten Strahlteiler BS1. Dessen Oberflächen auf die der Laserstrahl A auftritt und ein Teilstrahl B2 austritt sind in einem Winkel von 45 ° zur optischen Achse des Laserstrahls A geneigt. Der austretende Laserstrahl B1 trifft auf ein den Teilstrahl B1 reflektierendes Element M2, dessen reflektierende Oberfläche parallel zu den Oberflächen des ersten Strahlteilers BS1 also ebenfalls in einem Winkel von 45 ° in Bezug zur optischen Achse des Laserstrahls A und des Teilstrahls B2 ausgerichtet ist. Der Teilstrahl B2 wird auf eine Oberfläche eines weiteren Strahlteilers BS2 mit einem mit seiner reflektierenden Oberfläche im 45 ° Winkel ausgerichteten reflektierenden Element M2 gerichtet und transmittiert durch den weiteren Strahlteiler BS2.

Der vom Strahlteiler BS1 reflektierte Teilstrahl B1 trifft auf eine parallel zu den Oberflächen des ersten Strahlteilers BS1 ausgerichtete reflektierende Oberfläche des reflektierenden Elements M1, die wiederum in einem Winkel von 45 ° in Bezug zur optischen Achse des ersten Teilstrahls B1 ausgerichtet ist. Der dort reflektierte Teilstrahl B1 gelangt über ein optisches Element 5 zur Überwachung des Polarisations- oder Phasenzustandes des Teilstrahls B1 auf eine Oberfläche des weiteren Strahlteilers BS2 und tritt infolge Transmission durch diesen weiteren Strahlteiler BS2 hindurch.

Die beiden Teilstrahlen B1 und B2 werden so gerichtet, dass am weiteren Strahlteiler BS2 Interferenz erreicht ist, so dass die aus dem weiteren Strahlteiler BS2 durch Transmission hindurch tretenden Paare von miteinander interferierenden Teilstrahlen C und D miteinander interferieren. Zur Beeinflussung der Interferenz und des Phasenunterschieds der einzelnen Teilstrahlen eines Paares interferierender Teilstrahlen C und D kann der weitere Strahlteiler BS2 um einen bestimmten vorgebbaren Winkel θ in Bezug zu den optischen Achsen der Teilstrahlen B1 und B2 verschwenkt sein oder verschwenkt werden.

Bei dem in Figur 1 gezeigten Beispiel treffen die miteinander interferierenden und zueinander phasenverschobenen Teilstrahlen D auf ein um mindestens eine Achse verschwenkbares, reflektierendes Element 6, das in nicht dargestellter Form auch ein Polygonspiegel P sein kann. Bei dem gezeigten Beispiel kann es sich bei dem optischen Element 6 insbesondere um einen Scanner- oder Galvospiegel handeln. Mit diesem kann die Richtung der miteinander interferierenden Teilstrahlen D auf eine zu bearbeitenden Oberfläche eines Substrats S und bei diesem Beispiel auf ein vor der Oberfläche angeordnetes fokussierendes optisches Element L verändert werden, wodurch ein verändertes Interferenzmuster mit größerer Fläche auf der Oberfläche des Substrates S ausgebildet werden kann.

Die miteinander interferierenden Teilstrahlen C treffen bei diesem Beispiel auf einen optische Detektor 7 auf, mit dem die Position, die Einhaltung der Interferenz und der Phasenverschiebung der miteinander interferierenden Teilstrahlen C überwacht und dabei die Messsignale des Detektors 7 für eine Regelung, insbesondere des Schwenkwinkels θ des weiteren Strahlteilers BS2, der von 45 ° abweicht, genutzt werden kann.

Anstelle des optischen Detektors 7 könnte man aber auch eine weitere Oberfläche eines Substrates S in einem zweiten von dem Strahlteiler BS2 ausgehenden Strahlpfad 7 mit den miteinander interferierenden Teilstrahlen C bearbeiten. Dazu kann man zwischen dieser zu bearbeitenden Oberfläche eine weiteres Element zur Ablenkung der miteinander interferierenden Teilstrahlen C in Richtung auf diese zusätzlich zu bearbeitende Oberfläche sowie ggf. ein weiteres diese Teilstrahlen C fokussierendes Element vorsehen.

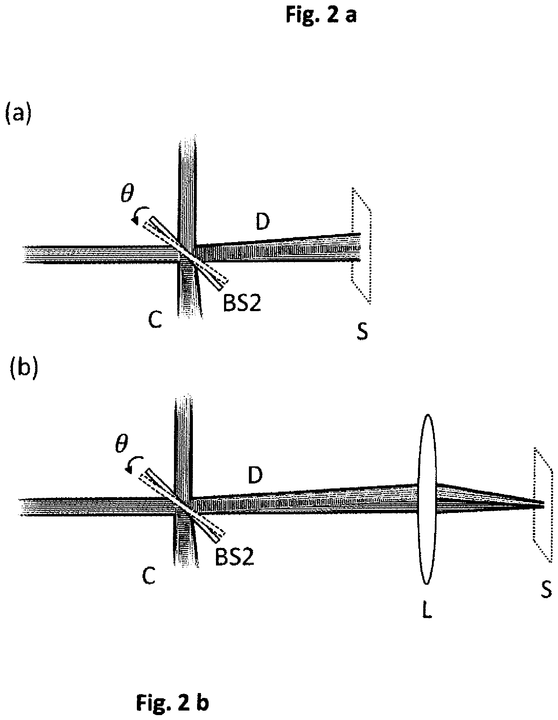

In Figur 2a ist in einer vergrößerten Darstellung gezeigt, wie der weitere Strahlteiler BS2 um eine Achse mit dem von 45 ° abweichenden Schwenkwinkel θ verschwenkt werden kann, so dass die gewünschte Interferenz und der Phasenunterschied der jeweils durch den weiteren Strahlteiler BS2 hindurch tretenden und dann miteinander interferierenden Teilstrahlen C und D erreicht werden können.

Bei dem in Figur 2b gezeigten Beispiel ist für die miteinander interferierenden Teilstrahlen D vor der zu bearbeitenden Oberfläche des Substrates S ein fokussierendes optisches Element L angeordnet, mit dem die Teilstrahlen D fokussiert werden.

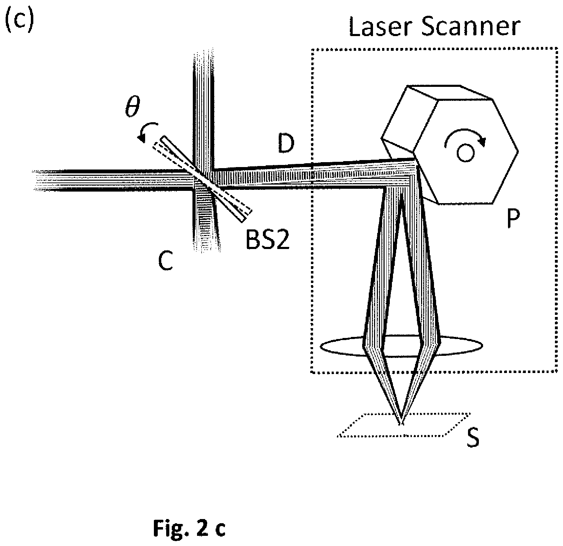

Bei dem in Figur 2c gezeigten Beispiel treffen die miteinander interferierenden Teilstrahlen D auf am äußeren Umfang eines Polygonspiegels P angeordnete reflektierende Oberflächen (Facetten). Der Polygonspiegel dreht sich dabei um eine Rotationsachse, wie dies mit dem Pfeil angedeutet ist. Durch die Drehung und dementsprechende Bewegung der bei diesem Beispiel sechs reflektierenden Flächen des Polygonspiegels erfolgt eine Auslenkung der miteinander interferierenden Teilstrahlen D in Richtung auf die jeweilige zu bearbeitende Oberfläche des Substrats S, vor der auch hier wieder ein fokussierendes optisches Element L angeordnet ist.

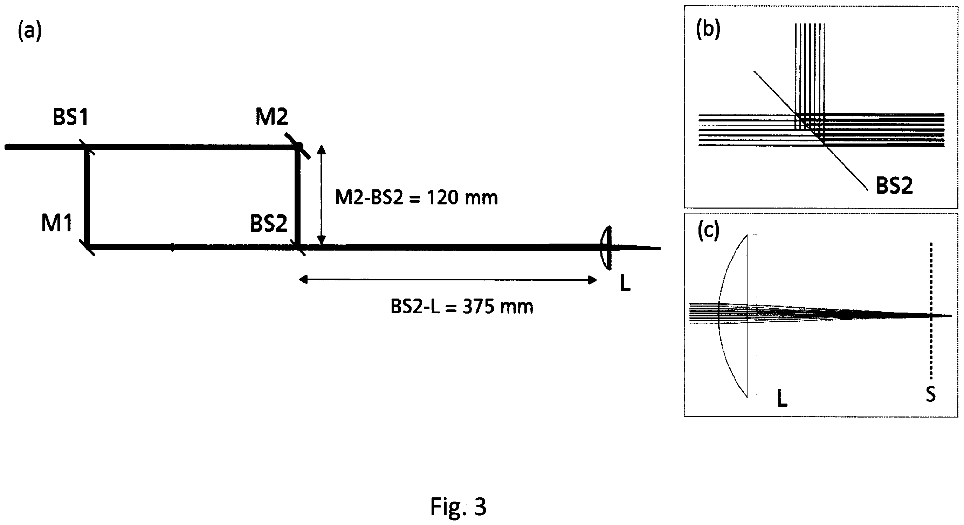

Figur 3a zeigt schematisch den Aufbau, der für eine Simulation der Interferenzperiode genutzt werden kann. Für die Simulation wurde die Abweichung des Winkels des Spiegels M2 berücksichtigt. In Figur 3b und 3c sind die Teilstrahlen in den Positionen M2 mit einem Verschwenkwinkel von 0,3° ausgerichtet und L gibt den Abstand zwischen dem Strahlteiler BS2 und einem fokussierenden optischen Element an.

In Figur 3b sind Verläufe der Teilstrahlen B1 und B2 bis zum weiteren Strahlteiler BS2 und von dort die veränderte Richtung der miteinander interferierenden Teilstrahlen D in Richtung des fokussierenden optischen Elements L gezeigt.

Aus Figur 3c kann man erkennen, wie die miteinander interferierenden Teilstrahlen D mit dem fokussierenden optischen Element L in Richtung auf das an einer Oberfläche zu strukturierende bzw. zu bearbeitende Substrat S fokussiert werden.

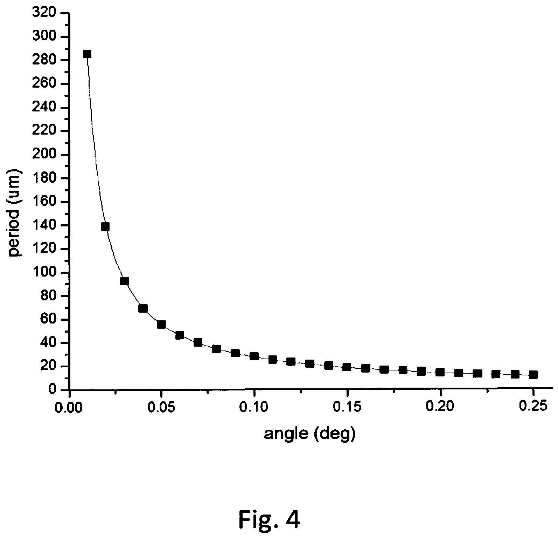

Das in Figur 4 gezeigte Diagramm gibt die Abhängigkeit des Winkels θ für das reflektierende Element M2 vom bereits erwähnten 45 ° Winkel in Bezug zur dadurch erreichbaren Interferenzperiode einer auszubildenden Strukturierung bzw. Bearbeitung an einer Oberfläche eines Substrates S wieder.

Anstelle des reflektierenden Elements M2 könnte man aber auch eines der anderen die Strahlrichtung der Laserstrahlung verändernden optischen Elemente BS1, M1 oder BS2 in einem entsprechenden Winkel θ ausrichten, um diesen Effekt zu erzielen.

**Patentansprüche**

1. Laseroptische Anordnung zur Laserstrukturierung von Oberflächen oder einer interferenzbasierten Laserbearbeitung, die zu einer lokal definierten Modifizierung an einer Oberfläche eines Substrats (S) führt, mit einer Laserstrahlquelle (1), bei der ein von der Laserstrahlquelle (1) emittierter Laserstrahl (A) mit mindestens einem Strahlteiler (BS1) in mindestens zwei Teilstrahlen (B1, B2) geteilt wird und die Teilstrahlen (B1, B2) auf reflektierende Elemente (M1, M2) und mindestens einen weiteren Strahlteiler (BS2) so gerichtet sind, dass mindestens zwei miteinander interferierende Teilstrahlen (C und D) auf eine zu bearbeitende Oberfläche eines Substrates (S) und/oder einen zweiten Strahlpfad (7) auftreffen, **dadurch gekennzeichnet, dass** mindestens einer der Strahlteiler (BS1, BS2) oder mindestens eines der reflektierenden Elemente (M1, M2) um eine senkrecht zur optischen Achse eines Teilstrahles (B1, B2) in einem Winkel θ von 45 °, in dem die Strahlteiler (BS1, BS2) und reflektierenden Elemente (M1, M2) in Bezug zur jeweiligen optischen Achse des Laserstrahles (A) oder des jeweiligen Teilstrahles (B1, B2) ausgerichtet sind, verschwenkbar oder verschwenkt ist, so dass ein Phasenunterschied zwischen den interferierenden Teilstrahlen (C, D) erreichbar ist und die Teilstrahlen (B1, B2) ab dem im Strahlengang der Teilstrahlen (B1, B2) ausgehend vom ersten Strahlteiler (BS1) zuletzt angeordneten Strahlteiler (BS2) interferieren.

2. Anordnung nach Anspruch 1, **dadurch gekennzeichnet, dass** im Strahlengang von miteinander interferierenden Teilstrahlen (C, D) zwischen dem im Strahlengang der Teilstrahlen (B1, B2) ausgehend vom ersten Strahlteiler (BS1) zuletzt angeordneten Strahlteiler (BS2) und der zu strukturierenden Oberfläche eines Substrates (S, 7) ein senkrecht zur optischen Achse interferierender Teilstrahl (C, D) um mindestens eine Achse verschwenkbares, die miteinander interferierenden Teilstrahlen (C, D) reflektierendes oder im Falle von Risleyprismen transmittierendes Element oder ein um eine Achse drehbarer facettierter Polygonspiegel (P, 6) so angeordnet ist, dass die miteinander interferierenden Teilstrahlen (C, D) auf eine zu bearbeitende Oberfläche eines Substrates (S, 7) auftreffen.

3. Anordnung nach Anspruch 1 oder 2, **dadurch gekennzeichnet, dass** im Strahlengang von miteinander interferierenden Teilstrahlen (C, D) vor dem Auftreffen auf eine zu bearbeitende Oberfläche eines Substrates (S, 7) mindestens ein fokussierendes optisches Element (L) angeordnet ist.

4. Anordnung nach einem der vorhergehenden Ansprüche, **dadurch gekennzeichnet, dass** im Strahlengang mindestens eines Teilstrahles B1, B2) ein Phasenschieber (5) angeordnet ist.

5. Anordnung nach einem der vorhergehenden Ansprüche, **dadurch gekennzeichnet, dass** der mindestens eine Strahlteiler (BS1, BS2) oder das mindestens eine reflektierende Element (M1, M2) um eine senkrecht zur optischen Achse eines Teilstrahles (B1, B2) in einem Winkel θ von 0 ° bis maximal 10°, bevorzugt maximal 5°, besonders bevorzugt bis maximal 2° verschwenkbar oder verschwenkt ist.

**Claims**

1. A laser-optic system for laser-structuring surfaces or interference-based laser processing, which results in a locally defined modification on a surface of a substrate (S), comprising a laser beam source (1) in which a laser beam (A) emitted by the laser beam source (1) is divided by at least one beam splitter (BS1) into at least two partial beams (B1, B2), and the partial beams (B1, B2) are directed at reflective elements (M1, M2) and at least one further beam splitter (BS2) in such a way that at least two partial beams (C and D) interfering with one another impinge on a surface of a substrate (S) to be processed and/or a second beam path (7),

  **characterized in that**
  at least one of the beam splitters (BS1, BS2) or at least one of the reflective elements (M1, M2) can be pivoted, or is pivoted, about an axis that is oriented perpendicularly to an optical axis of a partial beam (B1, B2) at an angle θ of 45°, at which the beam splitters (BS1, BS2) and reflective elements (M1, M2) are oriented with respect to the particular optical axis of the laser beam (A) or of the particular partial beam (B1, B2), so that a phase difference is achievable between the interfering partial beams (C, D), and

the partial beams (B1, B2) interfere starting with the beam splitter (BS2) arranged last in the beam path of the partial beams (B1, B2), proceeding from the first beam splitter (BS1).

2. The system according to claim 1, **characterized in that**, in the beam path of mutually interfering partial beams (C, D), between the beam splitter (BS2) that is arranged last, proceeding from the first beam splitter (BS1), in the beam path of the partial beams (B1, B2) and the surface of a substrate (S, 7) to be structured, a partial beam (C, D) interfering perpendicularly to the optical axis impinges on an element that can be pivoted about at least one axis and reflects or, in the case of Risley prisms, transmits the mutually interfering partial beams (C, D), or on a faceted polygon mirror (P, 6), which can be rotated about an axis, the element or the mirror being arranged in such a way that the mutually interfering partial beams (C, D) impinge on a surface of a substrate (S, 7) to be processed.

3. The system according to claim 1 or 2, **characterized in that** at least one focusing optical element (L) is arranged in the beam path of mutually interfering partial beams (C, D) prior to impinging on a surface of a substrate (S, 7) to be processed.

4. A system according to any one of the preceding claims, **characterized in that** a phase shifter (5) is arranged in the beam path of at least one partial beam (B1, B2).

5. A system according to any one of the preceding claims, **characterized in that** the at least one beam splitter (BS1, BS2) or the at least one reflective element (M1, M2) can be pivoted, or is pivoted, about an axis that is oriented perpendicularly to the optical axis of a partial beam (B1, B2) at an angle θ of 0° to a maximum of 10°, preferably a maximum of 5°, particularly preferably up to a maximum of 2°.

**Revendications**

1. Dispositif optique laser pour la structuration laser de surfaces ou le traitement laser basé sur des interférences, qui entraîne une modification définie localement sur une surface d'un substrat (S), comprenant une source de faisceau laser (1), dans laquelle un faisceau laser (A) émis par la source de faisceau laser (1) est divisé par au moins un séparateur de faisceau (BS1) en au moins deux faisceaux partiels (B1, B2) et les faisceaux partiels (B1, B2) sont dirigés sur des éléments réfléchissants (M1, M2) et au moins un autre séparateur de faisceau (BS2) de sorte qu'au moins deux faisceaux partiels (C et D) interférant l'un avec l'autre frappent une surface à traiter d'un substrat (S) et/ou un deuxième chemin optique (7),

**caractérisé en ce que**
au moins un des séparateurs de faisceau (BS1, BS2) ou au moins un des éléments réfléchissants (M1, M2) peut pivoter ou est amené à pivoter d'un angle θ de 45° autour d'un axe disposé perpendiculairement à l'axe optique d'un faisceau partiel (B1, B2), dans lequel les séparateurs de faisceau (BS1, BS2) et les éléments réfléchissants (M1, M2) sont orientés par rapport à l'axe optique respectif du faisceau laser (A) ou du faisceau partiel respectif (B1, B2), de sorte qu'une différence de phase entre les faisceaux partiels interférents (C, D) peut être obtenue et

que les faisceaux partiels (B1, B2) interfèrent à partir du séparateur de faisceau (BS2) disposé en dernier sur le chemin optique des faisceaux partiels (B1, B2) en partant du premier séparateur de faisceau (BS1).

2. Dispositif selon la revendication 1, **caractérisé en ce que**, sur le chemin optique des faisceaux partiels (C, D) interférant l'un avec l'autre entre le diviseur de faisceau (BS2) disposé en dernier sur le chemin optique des faisceaux partiels (B1, B2) en partant du premier séparateur de faisceau (BS1) et la surface à structurer d'un substrat (S, 7), un faisceau partiel (C, D) interférant perpendiculairement à l'axe optique frappe un élément pouvant pivoter autour d'au moins un axe et qui réfléchit les faisceaux partiels (C, D) interférant l'un avec l'autre ou, dans le cas de prismes de Risley, les transmet, ou un miroir polygonal à facettes (P, 6) pouvant tourner autour d'un axe, l'élément ou le miroir étant disposé de sorte que les faisceaux partiels (C, D) interférant l'un avec l'autre frappent une surface à traiter d'un substrat (S, 7).

3. Dispositif selon la revendication 1 ou 2, **caractérisé en ce qu'**au moins un élément optique de focalisation (L) est disposé sur le chemin optique de faisceaux partiels (C, D) interférant l'un avec l'autre avant leur impact sur une surface à traiter d'un substrat (S, 7).

4. Dispositif selon l'une des revendications précédentes, **caractérisé en ce qu'**un déphaseur (5) est disposé sur le chemin optique d'au moins un faisceau partiel (B1, B2).

5. Dispositif selon l'une des revendications précédentes, **caractérisé en ce que** le ou les séparateurs de faisceau (BS1, BS2) ou le ou les éléments réfléchissants (M1, M2) peuvent pivoter ou sont amenés à pivoter autour d'un axe disposé perpendiculairement à l'axe optique d'un faisceau partiel (B1, B2) selon un angle $\theta$ de 0° à 10° maximum, préférablement de 5° maximum, encore plus préférablement de 2° maximum.

**Fig. 1**

**Fig. 2 a**

(a)

(b)

**Fig. 2 b**

(c)

Laser Scanner

$\theta$

D

C

BS2

P

S

**Fig. 2 c**

(a)

BS1

M2

M1

BS2

M2-BS2 = 120 mm

BS2-L = 375 mm

L

(b)

BS2

(c)

L

S

EP 3 466 598 B1

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011226748 A
- EP 0930485 A2

- US 20110226748 A1